# EUROPEAN PATENT SPECIFICATION

(11) **EP 2 872 421 B1**
(45) Date of publication and mention of the grant of the patent: **22.03.2017**
(21) Application number: 13732572.6
(22) Date of filing: 01.07.2013
(51) Int. Cl.: A47J 31/36, B65D 85/804

(54) **BREWING SYSTEM WITH ADAPTABLE SEALING ELEMENT**
SYSTEM MIT ANPASSBAREM ABDICHTUNGSELEMENT
SYSTÈME AVEC ÉLÉMENT D'ÉTANCHÉITÉ ADAPTABLE

(30) Priority: 16.07.2012 EP 12005216
(43) Date of publication of application: 20.05.2015
(73) Proprietor: Tuttoespresso S.r.l., 20121 Milano (IT)
(72) Inventor: DOGLIONI MAJER, Luca, I-22010 Carate Urio (IT)
(74) Representative: Gislon, Gabriele
(86) International application number: PCT/EP2013/063873
(87) International publication number: WO 2014/012783

(56) References cited:
- EP-A2- 1 961 676
- WO-A1-2012/042487
- WO-A2-2010/084475
- ES-U- 1 077 395

## Description

### Technical field

The present invention relates to a brewing system including a capsule with an adaptable sealing element. More particularly, the invention relates to a system including a single use, i.e. disposable, capsule, or cartridge, for preparing beverage, such as coffee, from a dose of one or more products contained by the capsule, and a beverage production device (brewing device) for interacting with the capsule. With the wording adaptable it is meant that the sealing element is suitable to provide a sealing effect with different models of brewing devices.

### Background of the invention

Beverage capsules, especially disposable capsule for preparing coffee, have been known from the 1930's. Beverage capsules comprise a container portion that houses a dose of at least one extractable or reconstitutable product, generally ground coffee, but also tea herbal extracts, instant, e.g. powdered, drinks and liquid concentrates. The capsules also comprise a portion that interacts with a brewing device to prepare the required beverage. The typical brewing device comprises water heating means (e.g. a boiler), an enclosing member, or receptacle, intended to cooperate with the capsule to define a preparation chamber and a pump or similar means so that the brewing liquid, preferably hot water under pressure, can be supplied to the capsule for the extraction or reconstitution of the beverage from the dose of product contained therein.

Usually, the brewing device includes a first part with a receptacle for housing at least part of the capsule and a second part that cooperates with the first part in the brewing of the beverage from the capsule, the first and/or second part are mobile to each other and the receptacle has one edge, usually positioned in the lower or upper terminal part of the second part, that enters into contact with the sealing element of the capsule to compress it against the second part of the brewing device for providing a seal tight engagement with the capsule during the beverage preparation process.

In a known beverage preparation process a capsule is fed into the receptacle of the brewing device and is injected with the brewing liquid, typically hot water. The injected hot water passes through it and extracts the beverage from the ingredient enclosed therein. The beverage exits the capsule to reach a beverage collector and finally a cup or a container.

The receptacle encloses at least part of the capsule and cooperates with it and with the second part in a seal tight engagement in order to direct the hot water into the capsule to extract the beverage with no or with limited leakage. Leakage of the brewing liquid may negatively affect the extraction process of the beverage, and jeopardize taste and quality of the beverage.

A known type of capsule has a substantially frusto-conical body and a rim flange portion extending from one of the two bases of the capsule. The brewing device comprises means to compress the receptacle against the flange so as to reach the required sealing during the brewing step. There are known capsules provided with a flange that is located in correspondence of the side of the capsule where the beverage outlet is located. The beverage leaves the capsule from the base where the flange is located. A sealing between the flange and the receptacle is requested to avoid water leaking from the receptacle.

In known brewing devices the seal tight engagement between the capsule and the receptacle is generally obtained by exerting a pressure on the rim flange; in other words, the receptacle which is cup-shaped in order to enclose the capsule, is pressed against the flange-like rim of the capsule, i.e. a rim extending from the lateral surface of the capsule, along its perimeter and against a receiving plate where means for piercing the outlet wall of the capsule are located. The flange is thus compressed between receptacle and receiving plate of the said second part: sealing is required between the parts.

The problem exists of ensuring a seal tight engagement between the capsule, especially the capsule flange, and the receptacle of the brewing device. In fact, a leak of the brewing liquid outside the capsule can reduce the pressure inside the capsule and therefore reduce the extraction of the coffee flavours; in addition, water discharged to the drip-tray of the dispensing machine or even fed to the cup will be unpleasant to see. Any water that reaches the cup because of an inferior sealing element will dilute the beverage extracted from the capsule, delivering a drink with lesser organoleptic characteristics and inferior taste.

Additionally, there is the problem of having a capsule that can be used with different types of known brewing machines: often one type of capsule cannot work, or works with difficulty, with different models of brewing machines, even if they are based on the same technology. This is because in different types of machines, due to imprecise engineering or due to careful evaluation of the side effects of deliberate engineering choices, for instance the length of the movement of the first and second parts is not exactly identical and therefore the sealing element may result, when the two parts are closed together and the flange is compressed, to be too big in one machine (causing difficulty in closing the machine) or too small for the machine (causing a leakage of water).

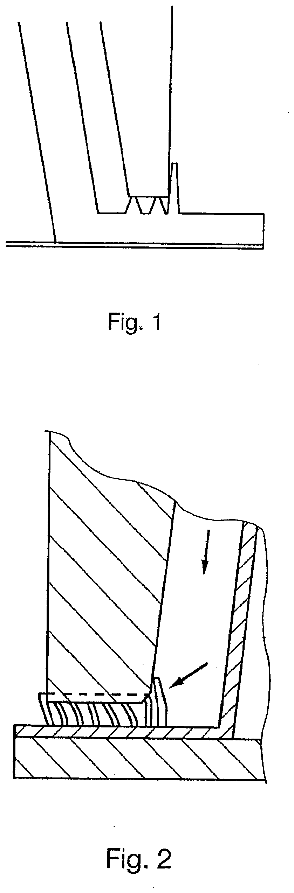

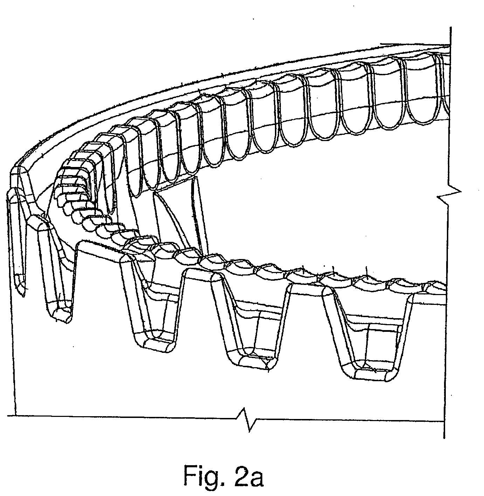

WO 2009/115474 discloses a brewing device where the pressing portion of the receptacle, i.e. the part of the receptacle which is brought into contact with the capsule, has two circular crowns (inner edge and outer edge) connected by an annular recess, each edge is provided with irregularities, indentations, and/or gaps (see fig. 2A). According to WO'474, the gaps are obtained in the edges of the receptacle in order to provide it with a flow directing means to control leakage if the device is operated without inserting a capsule. Nevertheless, and perhaps unsurprisingly so, using this device with certain capsules compatible with such receptacle, results in water leaks from the receptacle into the cup where coffee is being collected, providing a negative effect both visually and as far as taste is concerned, not to mention the drawback of rapidly filling with excess water the drip tray container.

Also, in some machines repeated use may result in wear and tear causing slight changes of the travel distance or misalignment of the first and second portions of the machine resulting, with time, in possible leakages of water from the brewing chamber.

EP1654966 discloses capsules provided with a resilient material, acting as a gasket or sealing member, which is added in correspondence of the flange-like rim, in order to engage the pressing portion of the receptacle and to interact with the receptacle to provide the desired seal tight engagement. This material is added to the capsule, with unwanted increased cost of the capsule.

Capsules are already known having one or more projecting elements, made of the same material of the capsule, and extending from its external surface, and in particular form its flange-like rim, in order to provide the sealing engagement with the receptacle, when compressed.

WO2010/084475, in the name of Ethical Coffee Company, describes several embodiments of a capsule having projecting elements on its external surface, and in particular on the upper surface of the flange-like rim. The projecting element can be one or more.

WO2010/137946, to Sara Lee, discloses a capsule having at least one projection for providing a sealing engagement with the receptacle, located on the flange. If the projection is integral with the flange, it comprises a plurality of elements, so that sealing is ensured; in one embodiment, shown in fig. 1, an additional element, higher than the others, is present and is arranged to abut the outer surface of the receptacle when the receptacle is insisting on the remaining, shorter, elements.

EP 2289820 teaches to use a plurality of "lips" protruding substantially vertically from the flange rim, some of the lips are compressed by the edge of the receptacle and some are not; in particular, the outer or inner lips could be not compressed to provide additional sealing under the pressure exerted by the water. Fig. 2 shows this embodiment.

The above mentioned embodiments do not solve the problem of having a sealing element completely adaptable to different machines.

The prior art is also disclosed in WO 2012/042487 A1, EP 1 961 676 A2 and ES 1 077 395 U.

It is an aim of the present invention to solve the above problems and to provide a system capsule that can be used with different shapes and profiles of the pressing portion of the receptacle, and with different closing mechanisms without negatively affecting the operation of the dispensing unit i.e. creating no problem while closing the machine or inserting/extracting the capsule into/from the receptacle. Another aim of the invention is to provide a system capsule which is easy to produce and wherein the sealing element is made integral with the capsule body, without the need of adding resilient sealing material on its external surface for providing sealing compensation for the irregularities provided on the receptacle due to wear and tear, imprecise engineering or altogether different closing mechanisms.

### Summary of the invention

These and other aims are achieved by the system for the preparation of a beverage according to claim 1.

The present beverage production system comprises a brewing device having a receptacle for enclosing at least part of the capsule, and a capsule which is provided with a lateral wall, an upper wall and a lower wall forming a hollow body where said product is contained. The capsule is made in thermoplastic materials, e.g polymers and/or copolymers of polypropylene or polyethylene.

The brewing device comprises two portions that are movable one with respect to the other: one is the above mentioned receptacle, the other is a receiving plate onto which the capsule is pressed during the brewing step, in a way known in the art (e.g. from the previously mentioned prior art). The capsule further comprises a flange-like rim laterally extending from the capsule and at least one sealing element in the form of a protrusion or projection extending from the flange-like rim, for providing a seal tight engagement with the pressing portion (or pressing edge) of the receptacle when the beverage production device is in use, i.e. when the receptacle is moved toward the flange rim of the capsule to press it against the receiving flange. Thus, the protruding portion is extending from the flange-like rim towards the receptacle, i.e. towards the inlet wall of the capsule; this direction will be referred to as "upwards". The expression "protrusion" is used herein to indicate a sealing element protruding from the flange-like rim of the capsule, in other words the sealing protrusion forms a portion having an increased thickness of the flange-like rim with respect to a portion of the flange-like rim outside the sealing protrusion. In particular, the sealing protrusion forms a portion of increased thickness of the flange-like rim with respect to the thickness of the portion of the flange-like rim adjacent to the lateral wall of the capsule. As previously mentioned, the sealing protrusion is spaced from the lateral wall of the capsule so that the edge (or part of the receptacle's edge in case there are two crowns) of the receptacle can be housed between lateral wall and the sealing protrusion

According to an aspect of the present invention the sealing protrusion, forming a thicker portion of the flange, is extending towards the peripheral edge (peripheral end) of the flange-like rim. The capsule also comprises a lid that forms the outlet wall of the capsule and that is in part attached to the flange rim of the capsule body. The lid is typically selected from a plastic lid and a foil element, but could be made of other materials; a typical foil element is comprising aluminium layer(s) coupled with plastic layers to provide flexibility and gas barrier properties, but other materials may be used, such plastic layer(s), usually tri-laminates including an oxygen-barrier, foil or layer(s) of an appropriate bio-material, or again a foil adequately pre-punctured in order to be used in machines that do not include opening means for the water outlet of the capsule, all of which readily available to the skilled in the art.

In another embodiment, the lid, preferably made of thermoplastic material, can also be provided with a plurality of holes for passage of the beverage.

In particular in the case of a plastic lid, flange and lid wall are welded together at a location that is between the edge of the flange rim and the sealing element. When the lid is made of a foil member, the foil can also be welded to a corresponding portion of the flange, usually between sealing element and lateral wall of the capsule. An example of a preferred embodiment of plastic lid with self-perforating outlets is disclosed in co-pending EP application EP 06821023.6.

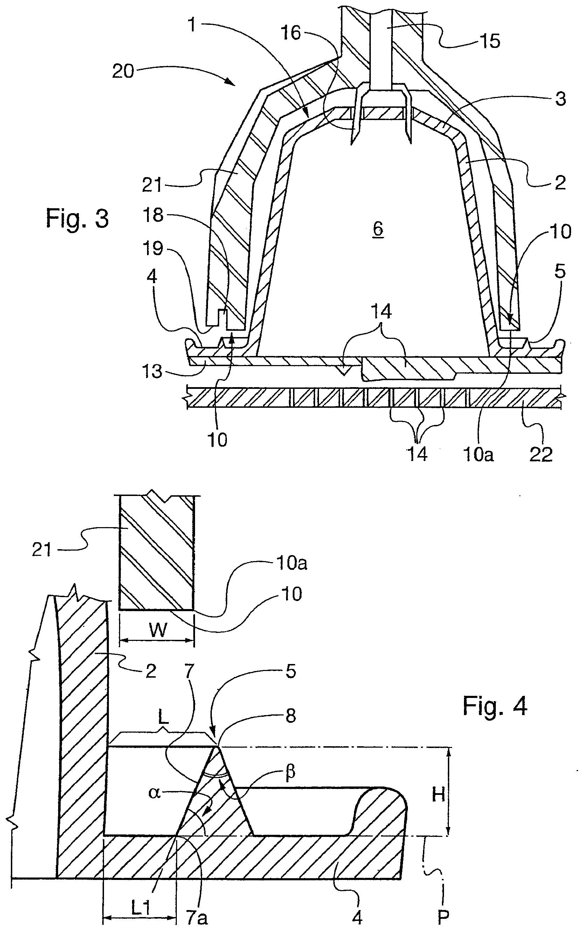

According to the invention, the protrusion of the capsule has at least one side, preferably the internal side, that is inclined by an angle α (Fig. 4) with respect to the plane of the flange rim; the angle α is the angle internal to the protrusion, i.e. the angle looking to the edge of the flange. The value of angle α (i.e. the inclination of the internal side of the protrusion), is within the range of 80 to 40 degrees. In addition to this value, the position (and possibly also the height) of the protrusion are arranged to have the protrusion contact the external portion of the edge of the receptacle of the brewing machine at said internal side of the protrusion, or at both said side of the protrusion and a top of the protrusion. With both of them it is meant that in a portion of the protrusion the external portion of the edge of the receptacle is contacting the top of the protrusion and in another portion of the protrusion, the edge is contacting the side of the protrusion. This compensate misalignments of the capsule in the brewing device.

It has to be noted that the inclination angle α of said at least one side of the sealing protrusion is measured, as shown in the figures, between said inclined side and the plane passing through the upper surface of the flange-like rim outside said sealing protrusion. In other words, the inclination angle α is measured from the surface (plane) of the flange-like rim outside said at least one sealing protrusion. As shown in the figures, the inclination angle α is preferably measured from the upper surface (plane) of the flange-like rim portion adjacent to the lateral wall of the capsule. According to an aspect of the invention, in the closed condition or in the brewing step, the edge of said receptacle is contacting both the protrusion extending from the flange-like rim of the capsule and the lateral wall of the capsule. By reaching this position a good seal engagement between the capsule and the brewing device can be obtained.

Moreover, according to another possible embodiment, in the closed condition or in the brewing step the edge of the receptacle is contacting the protrusion, and in particular at least a point of its inclined side, the lateral wall of the capsule and at least a portion of the flange-like rim of the capsule comprised between the lateral wall and the inclined side of the protrusion. The contact between the edge of the receptacle and three different surfaces of the capsule allows to increase the sealing effect, thus avoiding any leakage of the brewing liquid injected into the capsule.

According to an aspect of the present invention, in the closed position, or at the start of the brewing step, the edge of the receptacle is initially contacting the sealing protrusion, and then the pressure and temperature conditions determine the movement of the contact point between the edge of the brewing device with the sealing protrusion during the beverage preparation. It has to be noted that in all the above mentioned closed conditions, the top and/or the inclined side of the protrusion is contacted by the external portion of the edge of the receptacle, i.e. the portion of the edge facing away from the lateral wall of the capsule.

It has to be noted that the receptacle of the brewing device could be provided with different shapes. As shown in the left side of figure 3, the receptacle can be also provided with two or more crowns (edges) 10 and 19. Also in these cases an external portion (10a) of one of the edges, preferably the external portion of the internal edge 10, of said receptacle contacts the sealing protrusion in at least one location selected from the top and the side of the protrusion, preferably the side of the protrusion. In the following description reference 10 is used to identify an edge of the receptacle that can be either the single edge visible in fig. 3 on the right side or the internal edge of the double-crown receptacle (comprising edge 19 and edge 10) shown in fig. 3 on the left side. In general, the portion of the edge facing away from the lateral wall (i.e. the external portion of the edge - internal or external in case of two or more crowns) is pressed against the inclined side of the sealing protrusion. The invention also relates to a capsule for preparing beverages according to claim 24. The capsule is comprising a hollow body including a lateral wall, an inlet wall, a flange-like rim and one protrusion extending outwardly of said flange rim; the protrusion is spaced from the lateral wall of the capsule and has an internal side (i.e. a side facing the lateral wall of the capsule) that is inclined by an angle α with respect to the plane of the flange rim, the angle α is within the range of 80 to 40 degrees.

The inclination of the side of the sealing protrusion allows to obtain an effective seal-tight engagement with the receptacle of the brewing device and at the same time to reduce the force that has to be applied in order to close the capsule inside said receptacle. In particular, an inclination angle greater than 80 degrees cannot be effectively contacted by the receptacle because the inclined side of the sealing protrusion is too "vertical". On the other hand an inclination angle of less than 40 degrees is not able to provide an effective barrier to the brewing liquid when contacted by the receptacle edge.

According to an aspect of the present invention the inclination angle α is comprised in the range 80 to 60 degrees, preferably 75 to 60 degrees, and more preferably 70 to 65 degrees. An inclination angle comprised in the preferred range 75 to 60 degrees, is particular advantageous because it allows an effective seal-tight contact with the receptacle of the brewing device and at the same time do not need high compression forces to be applied in order to enclose the capsule inside the receptacle during the brewing preparation process. Additionally, the claimed range 75 to 60 results in the adaptability of the capsule sealing system to a vast majority of brewing devices, operating with a receptacle that encloses the capsule and compresses the flange rim of the capsule to obtain a sealing effect during the brewing process. A most preferred range is 70 to 65 degrees, wherein the inventions advantages are most evident.

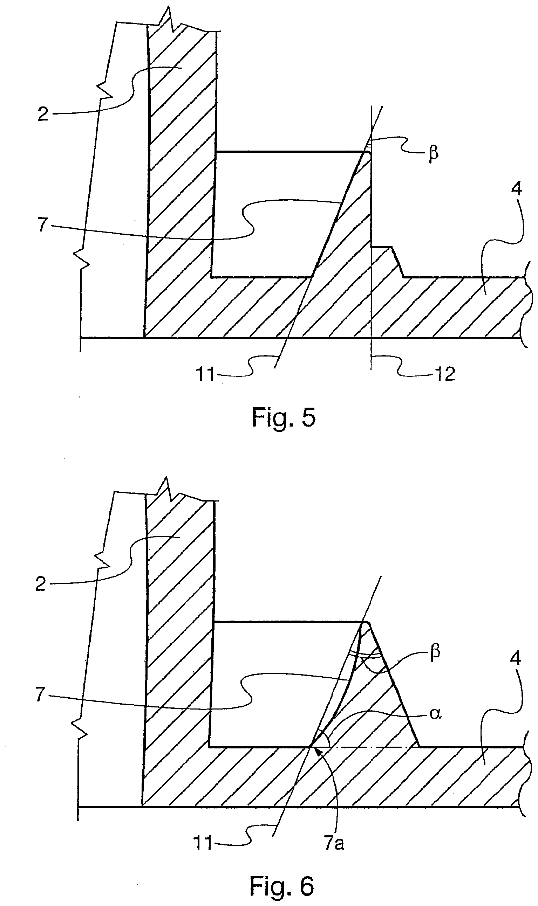

Preferred embodiments are listed in the depending claims. According to one exemplary embodiment the internal side of the protrusion is irregular or curved; in this embodiment, the inclination of the side, and angle α, are identified by a plane that extends from top to base of the internal side, as shown in fig. 6.. According to another aspect, top of the protrusion is at least in part plastically deformable and, when deformed by the device's receptacle, the height of said protrusion can be reduced by 20-30 %.

According to an exemplary embodiment, the protrusion is in the shape of a triangle wherein the angle β of the top vertices of said triangle(s) is in the range of 10 to 60 degrees, preferably 10 to 44 or 45, more preferably 10 to 40 degrees and most preferably 15 to 35 degrees; when the protrusion is an isosceles triangle, angle α is preferably in the range of 60 to 45 degrees. Other possible triangles are selected from rectangled and scalene triangles. The combination of the above values provides that the top and/or the inclined side of the protrusion is deformable to compensate different travel paths of the receptacles in different brewing devices. Thus, a brewing device of the invention's system can be selected from a plurality of brewing devices having different receptacles: the protrusion from the capsule flange is located and is shaped so as to be compressed by each of said receptacles when used with each of the devices.

According to an aspect of the present invention, the sealing protrusion has an inclined side facing the lateral wall of the capsule (i.e. an internal inclined side) as above discussed and forms at least one portion of increased thickness of said flange-like rim. In an exemplary embodiment said portion of increased thickness is extending from said at least one side of the protrusion towards the peripheral edge of the flange-like rim.

The sealing protrusion forming an increased thickness of the flange-like rim portion of the capsule may extend for the entire space between the inclined side and the peripheral edge of the flange, or the thicker portion formed by the sealing protrusion can represent only part of the flange-like rim between the inclined side of the sealing protrusion and the peripheral edge of the flange-like rim.

According to an aspect of the present invention, the sealing protrusion is arranged spaced from the lateral surface of the capsule, and the sealing protrusion forms an increased portion of the flange-like rim with respect to the portion of the flange like-rim adjacent to the lateral wall of the capsule. According to an aspect of the present invention, the portion of increased thickness of the flange-like rim comprises a flat surface extending from said inclined side to the edge of said flange-like rim. Preferably the flat surface of the thicker portion is extending from the top of the inclined side of the sealing protrusion.

It has to be noted that, according to a possible embodiment, if the protrusion is not in the shape of a complete triangle and it is provided with a flat surface extending from the inclined side of the protrusion towards the edge of the flange-like rim, angle β of the top vertices of the protrusion, i.e. between the inclined side and the substantially flat surface extending from the inclined side, is greater than 60 degrees, preferably greater than 90 degrees and most preferably greater than 100 degrees.

According to an aspect of the present invention, the capsule comprises at least one cavity that is located below the sealing protrusion and/or below the flange-like rim. According to another aspect of the invention, the at least one cavity is arranged on the surface of the flange-like rim facing away from the inlet wall of the capsule.

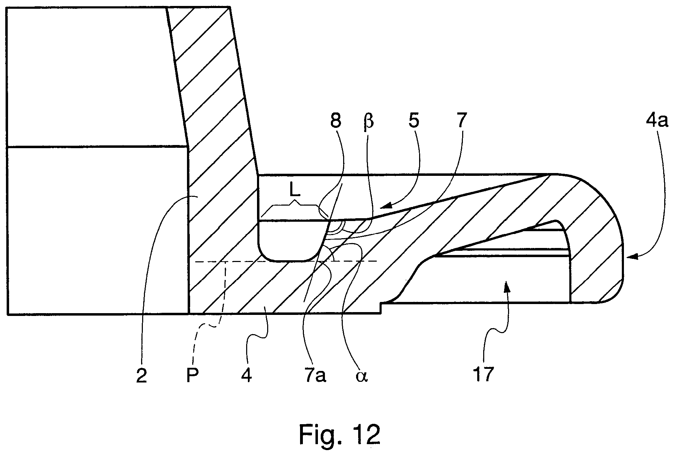

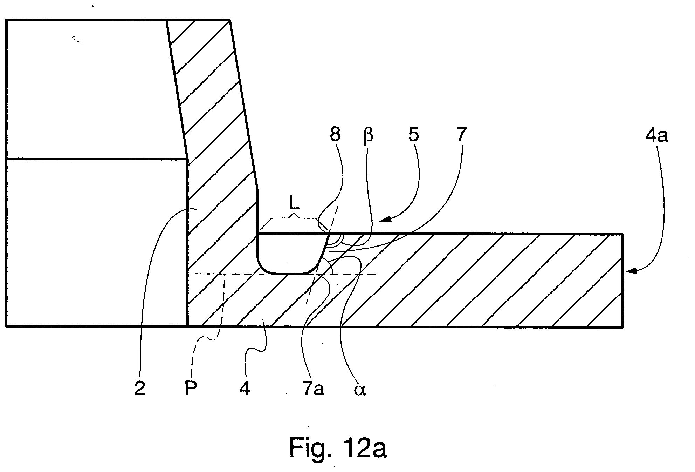

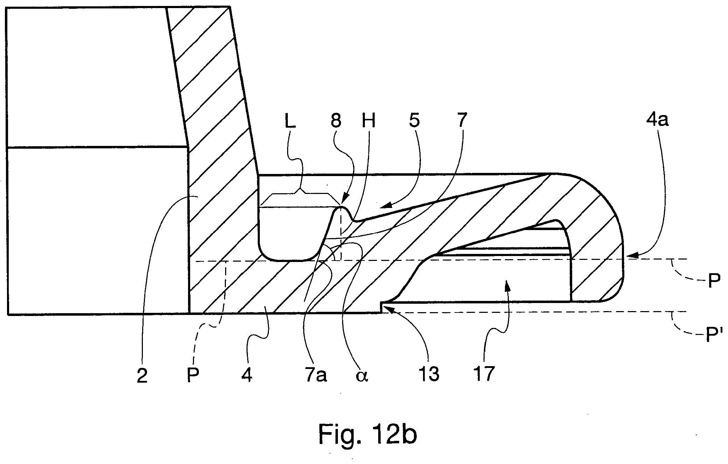

The edge of the flange-like rim can be substantially L-shaped if viewed in a cross sectional view. Preferably the end portion of the L-shaped edge is directed away from the inlet wall of the capsule. Therefore, the L-shaped edge of the flange-like rim forms a cavity arranged on the lower surface of the flange-like rim. In an exemplary embodiment as shown in figures 12 and 12B, the L-shaped portion of the flange is shorter than the total height of the flange 4, i.e. the lower end of the L-portion of the flange stops at a distance from the plane of the lower side of the flange; lower side of the flange means the side of the flange facing away from the inlet wall for the water.

According to another aspect of the invention, a cavity is located between flange and lid of the capsule, in correspondence to the sealing protrusion to increase its sealing performance upon compression.

According to another aspect of the invention, the capsule comprises radially extending sealing elements, or ridges, that are located on the flange of the capsule and protrude from it. In an exemplary embodiment, said radially arranged elements extend from the lateral wall of the capsule and the sealing protrusion that is circumferential to the capsule lateral wall.

It is therefore another object of the invention a system capsule that comprises a plurality of sealing elements that are protruding from the capsule flange rim and that extend radially with respect to the axis of the capsule. With the use of suitable radial sealing elements, the presence of the sealing protrusion could be no longer required. The combination of the above mentioned single aspects is hereby disclosed by referring to it and said combination is within the scope of the invention.

The invention provides several advantages with respect to the prior art. As above mentioned, the capsule can be used with different brewing devices and give with all of them a very good sealing between the pressing edge of the receptacle and the flange; the sealing is effective from the first moments of the brewing process. The capsule of the invention is also compensating the possible small changes of the length of the path of the receptacle (and thus of the compression force required to close the brewing device) or misalignements that may occur with time within the same device.

The above advantages apply both to systems including sealed capsules and devices that have a perforating element for injecting water in the capsule and to systems including open capsules and devices that do not have blades or other perforating devices. Similarly, the sealing advantages apply to capsules having a rigid lid and to capsules having a lid made of a foil or a membrane. Moreover, they apply to capsules formed by a plastic body made out of injection-moulding technology, as well as to capsules made out of stamping or thermo-forming process. The latter process may produce a protrusion with a smoother edge, and - underneath the protrusion - the opposite face of the flange may bear a concavity corresponding to protrusion, although the effect will be the same.

These and other advantages will be discussed in greater detail with reference to the enclosed drawings, that are provided only by way of example and should not be construed as limiting the scope of the invention. In the drawings:
- Fig. 1, Fig. 2 and Fig. 2A are exemplary embodiments of the prior art;
- Fig. 3 is a schematic cross section of an exemplary embodiment of the system;
- Fig. 4 is an enlarged sectional view of an exemplary sealing element according to the invention;
- Fig. 5 and 6 are sectional views of other exemplary embodiments of the sealing element;
- Fig. 7A and 7B show two possible positions of the receptacle of the brewing device with respect of the sealing protrusion of the invention;
- Fig. 8 and 9 are two cross sections showing another embodiment of the invention and the interaction of pressing portion of the receptacle and sealing protrusion;
- Fig. 10 and 11 show another possible embodiment of the invention;
- Fig. 12, 12A and 12B are enlarged sectional views of other possible embodiments of the sealing protrusion of the system capsule of the invention.

With initial reference to figures 1 - 2A, these figures refer to the prior art and exemplify how the system is working only if the position and the dimensions of the components of the system are within precise ranges. Fig. 2A is exemplary of the difficulty in obtaining a good sealing of the capsule on the flange in some commercially available brewing devices using that type of receptacle. In this embodiment, the receptacle is said to have a pressing portion formed by two circular crowns (inner edge and outer edge) connected by an annular recess, each edge is provided with irregularities, indentations, and/or gaps.

Figure 3 shows a combination of capsule and part of the brewing device according to the invention. More in detail, the system for preparing a beverage comprises a capsule 1 and a brewing device. The capsule is comprising a hollow body 6 including a lateral wall 2, an inlet wall 3, a flange-like rim 4 and a protrusion 5 extending outwardly of said flange rim. In general, protrusion 5 extends along a circumference that has a center corresponding to the axis of the capsule (or rotationally symmetrical); the lower or bottom part of the lateral wall 2 is preferably curved to help centering the capsule in the receptacle.

The brewing device 20 comprises a receptacle 21 movable with respect to a receiving plate 22 of the brewing device from an open position to a closed position for housing at least part of the capsule hollow body in the enclosing receptacle 21 and to provide a closed chamber around the capsule when heated and pressurized water is fed to the interior of said capsule during the brewing step. Plate 22 is provided with simply one or a few or even a plurality of holes 14 to let the beverage flow to its final container. The receptacle 21 is provided with a pressing edge 10 having an external portion 10a, i.e. the external portion facing away from the lateral wall 2 of the capsule. The receptacle shown on the left side of fig. 3 is of the type having a double crown, similarly to the one shown in fig. 2A, and has two circular crowns (inner edge 10 and outer edge 19) connected by an annular recess 18, each edge is provided with irregularities, indentations, and/or gaps. Outer edge 19 is shorter than inner edge 10. According to the invention, only inner edge 10 is used to carry out the required sealing, possibly with annular recess 18, and outer edge 19 is not compressing the flange or part of it. The receptacle shown in the right side of fig. 3 is of the single crown type, with a single pressing edge 10 provided with an outer edge 10a, that is the part of the edge that will contact the sealing protrusion 5.

In the remaining attached figures, the receptacle 21 is always schematically shown having a substantially rectangular cross shape and only pressing edge 10 is shown, this being the portion of receptacle where the sealing action is carried out. Notwithstanding this, the receptacle 21 of the brewing device could be provided with different shapes for example with rounded edge or discontinuous edge, and also in these cases an external portion 10a of the pressing edge 10 can be identified, for example in correspondence of the portion connecting the lateral external surface with the bottom pressing surface (i.e. edge 10) of the receptacle and with the area of edge 10 immediately adjacent to said connecting portion.

In an exemplary embodiment of the invention, the maximum external diameter of the lateral wall 2 of the capsule, i.e. the diameter measured at the intersection with the flange 4, is equal to the internal diameter of receptacle 21, and the external diameter of the receptacle 21 is equal to the diameter of the circle defined by the sealing protrusion 5 (as previously mentioned the protrusion is in the form of a circumference concentric with the lateral wall 2 of the capsule).

The capsule also comprises a lid 13 that forms the outlet wall of the capsule and that is in part attached to the flange rim 4 of the capsule body. The lid 13 shown in fig. 3 is a plastic lid provided with protruding portions that act as self-piercing outlets once they are compressed against plate 22, optionally with the help of the pressure inside the capsule. Flange and lid wall are welded together at a location that is preferably between the edge of the flange rim and the sealing protrusion 5. The lid is not shown in figures 4-11, for sake of a greater simplicity of the drawings.

As mentioned, the lid can be made also with different technology than the one above described. For instance a foil element, in laminated plastics or from other materials, such as bio-material, plastic derived from renewable energy or alloy materials including a metallic base; a typical foil element is comprising aluminium layer(s) coupled with plastic layers to provide mechanical and gas barrier properties, welded to a corresponding portion of the flange. Other solutions available to the skilled in the art comprise pre-punctured plastic foils, plastic lids with pre-cut holes, or filter paper.

In the exemplary embodiment of figure 3, the capsule 2 is a sealed capsule that receives the required water from channel 15 of the base of the receptacle 21. Blades 16 perforate inlet wall 3 to provide passages for the water entering the capsule. As previously mentioned, other designs of receptacles and water feeding systems can also be used, e.g. for a capsule that is not sealed and where inlet wall 3 has a plurality of passages or water inlets may be created on the water inlet wall of the capsule by perforating a foil using spikes built into said water inlet wall (such as in WO2006/030461 by the Applicant), no blades 16 are required.

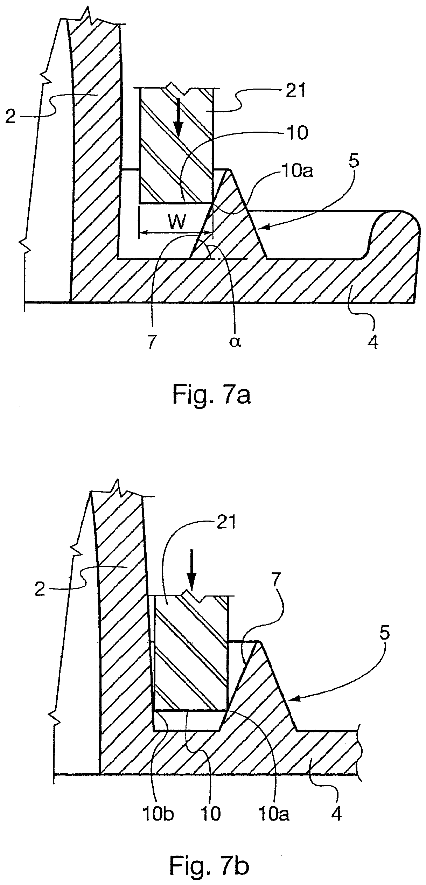

The flange 4 is divided by sealing protrusion 5 into two portions that are preferably co-planar; however, the two portions could lie in different planes. Protrusion, or sealing element, 5 has any suitable cross section shape, such as the exemplary shape of a triangle shown in figures 4, 7, or such as the shapes of fig. 5 and 6, or such as the shape shown in figures 12 and 12A. Truncated triangles, i.e. trapezes, or other shapes of the cross-section of the protrusion, can also be used, provided that the top is plastically deformable and the side on which outer edge 10a will insist in a closed condition, has the required inclination. Independently on the shape of the cross-section of protrusion 5, sealing element 5 has at least one side 7 that is inclined by an internal angle α with respect to the plane of flange rim 4, said angle α, the position of the protrusion on the flange and the height H of the protrusion (measured from plane P, see fig. 4), are arranged to have protrusion 5 contacting the external portion 10a of the edge 10 of receptacle 21 at said side of the protrusion, or at both said side of the protrusion and the top of the protrusion.

The inclination angle α of said at least one side 7 of the sealing protrusion 5 is measured, as shown in the figures, between the inclined side and the plane P passing through the upper surface of the flange-like rim outside the sealing protrusion 5.

As shown in the figure the inclination angle α is preferably measured from the plane P of the flange-like rim 4 portion that is adjacent to the lateral wall 2 of the capsule. Angle α is within the range of 80 to 40 degrees, preferably in the range 80 to 60 degrees, more preferably in the range 75 to 60 degrees, and most preferably in the range 70 to 65 degrees, and is measured with reference to the plane in which the side 7 lies; if the said side is irregular or concave/convex, or has a shape that is not plane, in order to measure the angle α a virtual plane is defined for side 7 by tracing a line 11 between top 8 and point 7a, where flange 4 meets side 7, as shown in fig. 6. In the preferred embodiment the inclined side 7 is the internal side, i.e. the side that is facing lateral wall 2 of capsule 1. As previously mentioned, side 7, i.e. the side that will, or could, contact the external portion of edge 10 of receptacle 21, can be irregular, as in fig. 5, or concave, as in fig. 6, or have other shapes, e.g. stepped. In all cases, side 7 is inclined with respect to plane P of the flange and defines an internal angle α. By "internal angle" it is meant the angle that is internal to projection 5, i.e. the angle facing away from lateral wall 2 of the capsule.

The shape of the cross sections of protrusion 5 in general is in the form of a triangle or of a truncated triangle and the triangle can be selected from rectangled and scalene triangles, or from isosceles triangles; when the protrusion is in the form of an isosceles triangle, angle α is preferably in the range of 80 to 70 degrees. Preferably, the angle β of the top vertices of said triangles is in the range of 10 to 44 degrees, preferably 15 to 35 degrees; the same values apply to other shapes, for these shapes angle β is defined by identifying a plane for the sides of the protrusion in a way similar to what shown in fig 5 and 6 with virtual planes 11 and 12. In this way it can be ensured that the top part of the protrusion is sufficiently thin to be at least in part plastically deformed when compressed by the receptacle's edge so as to compensate different end positions of the receptacles of different brewing devices, yet allowing optimal sealing means.

According to different possible embodiments, the shape of the sealing protrusion 5 between the inclined side 7 and the peripheral edge 4a of the flange-like rim 4 can be different.

As mentioned above, the sealing protrusion 5 forms at least one portion of increased thickness of the flange-like rim 4, and according to a possible embodiment the portion of increased thickness of the sealing protrusion is extending from said at least one side 7 towards the peripheral edge 4a of the flange-like rim 4.

It has to be noted that the sealing protrusion 5 forming an increased thickness portion of the flange-like rim 4 of the capsule may extend for the entire space between the at least one inclined side 7 and the peripheral edge 4a of the flange, as disclosed in the embodiment shown in the sectional view of figure 12A.

More in detail, in the embodiment shown in figure 12A, the sealing protrusion 5 comprises an inclined side 7, namely an internal side, facing the lateral wall 2 of the capsule, having the required inclination angle α; protrusion 5 forms an increased thickness portion of the flange-like rim 4 extending completely between said side 7 and the edge 4a of the flange-like rim 4. In other words, in the embodiment shown in figure 12A, the sealing protrusion 5 forms an increased thickness of the flange-like rim 4 with respect to the thickness of the flange-like rim outside the sealing protrusion, and in particular with respect to the portion of the flange-like rim adjacent to the lateral wall 2 of the capsule.

As shown in figure 12A the portion of increased thickness of the flange-like rim comprises a flat surface 12 extending from the top 8 of the sealing protrusion 5 to the edge of said flange-like rim 4. In the shown embodiment the flat surface is parallel to the lower surface of the flange-like rim 4 thus a portion having a constant increased thickness is formed between side 7 and the edge 4a of the flange-like rim 4.

However, according to different possible embodiments not shown in the figures, the flat surface may not extend from the top of the sealing protrusion but at distance from the top. Preferably, the sealing protrusion 5 forms between the side 7 and the edge 4a of the flange 4 a constant increased thickness, i.e. the sealing protrusion is provided with a side 7 and extends towards the edge 4a of the flange 4 with a substantially flat upper surface 12.

However, according to different possible embodiments, a variation of the thickness of the sealing protrusion between the side 7 and the edge 4a of the flange 4 can be provided.

Additionally, it has to be noted that even if only a sectional view, taken along a radial plane passing through a central axis of the capsule is shown in figure 12A, the sealing protrusion 5 extend continuously for the entire circumference of the flange 4, in other words, all the section taken along the circumference of the flange 4 are preferably equal to each other.

According to another possible embodiment of the capsule according to the invention, see for example figure 12, the sealing protrusion 5 forming an increased thickness of the flange-like rim 4 is extending only for a part of the space between the inclined side 7 and the peripheral edge 4a of the flange-like rim 4.

In the embodiment shown in figure 12, the sealing protrusion 5 comprises at least one side 7 that is inclined by an internal angle α with respect to the plane of flange rim 4. The inclined side 7 is the internal side of the sealing protrusion 5 facing the lateral wall 2 of the capsule.

As mentioned above, the angle α is within the range of 80 to 40 degrees, preferably in the range 80 to 60 degrees, more preferably in the range 75 to 60 degrees, and most preferably in the range 70 to 65 degrees, and is measured between the plane in which the side 7 lies and the plane P passing through the surface of the flange-like rim 4 from which the sealing protrusion 5 is projecting, i.e. the surface of the flange-like rim 4 from which the sealing protrusion 5 defines a portion having an increased thickness.

As shown in figure 12, the inclination angle α is measured from the upper surface of the portion of the flange-like rim 4 adjacent to the lateral wall 2.

In the shown embodiment the angle α is substantially 67 degrees.

In the embodiment shown in figure 12, the sealing protrusion 5 forms an increased thickness of the flange-like rim with respect to the portion of the said flange adjacent to the lateral wall 2 of the capsule.

Also in this embodiment, the side 7 can be irregular or concave/convex, or in general can be provided with a shape that is not plane. In these cases in order to measure the angle α a virtual plane is defined for side 7 by tracing a line 11 between top 8 and point 7a, where flange 4 meets side 7, as shown in fig. 12.

It has to be noted that even if the in the embodiment shown in figure 12, the side 7 has a rounded incidence point with the upper surface (plane P) of the flange-like rim 4, it is possible to identify an imaginary point where the projection of the side 7 and the projection of the surface (plane P) of the flange-like rim are incident. Additionally, the top portion 8 of the side 7 can be identified in the embodiment shown in figure 12 due to the change of inclination towards the peripheral edge 4a of the flange rim 4.

In the embodiment of figure 12B the part of the protrusion adjacent to side 7 has a vertex or top 8 that is in the shape of a triangle, the remaining external part of the rim being identical to that of the embodiment of figure 12.

As it will be disclosed later, the distance L between top 8 of protrusion 5 and lateral wall 2 of the capsule is comprised in the range of 0.6 mm to 1.0 mm, and in the embodiment shown in figure 12 is preferably 0.7 mm. In this embodiment, the distance L1 is preferably 0.5 to 0.6 mm.

As shown in figure 12, the increased thickness portion of the flange-like rim 4 formed by the sealing protrusion 5 comprises a flat surface extending from said inclined side 7 to the edge 4a of the flange-like rim. Preferably the flat surface of the thicker portion is extending from the top 8 of the inclined side 7 of the sealing protrusion 5.

In the shown embodiment, the angle β of the top vertices of the protrusion 5, i.e. the angle measured between the inclined side 7 and the substantially flat surface extending from the inclined side 7, is greater than 90 degrees, preferably greater than 100 degrees. In the embodiment shown in figure 12, the angle β is substantially 110 degrees.

As already mentioned, according to a possible embodiment, as shown in figures 12 and 12B, the sealing protrusion 5 forms a thicker portion of the flange-like rim extending only for a part of the space between the inclined side 7 of the sealing protrusion 5 and the peripheral edge of the flange-like rim 4.

In other words, as shown in figure 12, the sealing protrusion 5 is extending towards the peripheral edge 4a of the flange-like rim 4, but not for the complete extension of the flange-like rim 4.

More in detail, in the embodiment shown in figure 12 and 12B, the flange-like rim 4 terminates with a substantially L-shaped edge (in a radial sectional view). The end portion of the L-shaped edge is direct away from the inlet wall 3 of the capsule. This configuration allows to form a cavity 17 in correspondence of the lower surface of the flange-like rim 4.

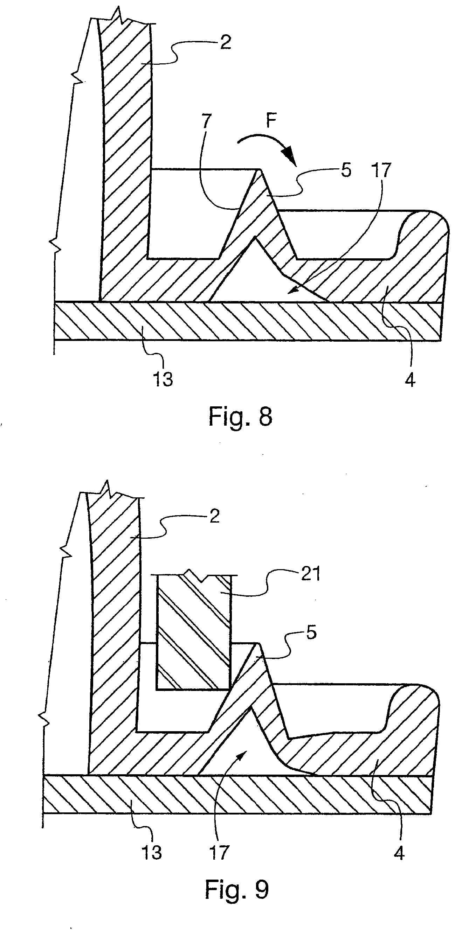

In fact, the flange-like rim 4 is shaped to comprise a cavity 17 that is located below the flange 4, i.e. in correspondence of the surface of the flange 4 that is facing away from the inlet wall 3 of the capsule. The cavity 17 is arranged, in the shown embodiment of figure 12, in correspondence of the edge 4a of the flange 4, and particularly adjacent to the sealing protrusion 5. The cavity is preferably extending for all the circumferential extension of the flange-like rim 4. it cab be interrupted However, according to different possible embodiments, as shown in figure 8 that will be disclosed later in greater detail, the cavity 17 can be also arranged in correspondence of the sealing protrusion 5.

The substantially L-shape of the edge 4a of the flange-like rim 4 makes the edge of the flange-like rim 4 more flexible, thus it can be adapted to different brewing devices, thus reducing difficulties in removing the capsule from the brewing device at the end of the beverage preparation process.

In the exemplary embodiment as shown in figures 12 and 12B, the L-shaped portion of the flange is shorter than the total height of the flange 4, i.e. the lower end of the L-portion of the flange stops at a distance from the plane P' of the lower side of the flange; lower side of the flange means the side of the flange facing away from the inlet wall for the water. A step 13 is preferably provided where cavity 17 reaches plane P' of the lower side of flange 4.

Additionally, as valid for all the figures and as already mentioned above in connection to figure 12A, the sealing protrusion 5 is circular, i.e. it extends continuously for the entire circumference of the flange 4, in other words all the sections taken along the circumference of the flange 4 are preferably equal to each other.

As a general rule, the height H (fig.4) of protrusion 5, that is measured from the plane P of the upper side of flange 4, i.e. the side facing the inlet wall 3, is within the range of 0.3 to 1.3 mm, preferably 0.6 to 1.0, most preferably is 0.8 or 0.9 mm. The distance L between top 8 of protrusion and wall 2 of the capsule is preferably equal to or greater than the width W of edge 10 of receptacle 21. In case the distance L is greater than the width W of the edge 10 of the receptacle, the distance L is preferably up to 1.5 times greater than the width W of the edge 10 (see e.g. fig.4), i.e. 1.0W≤ L ≤ 1.5W. In an exemplary embodiment, L is in the range of 0.6 mm to 1.0 mm, preferably 0.7 mm; L1 is 0.4 mm to 0.7 mm, preferably 0.5 mm to 0.7 mm. Additionally, preferred values of the distance L1 are comprised in the range 0.63mm to 0.67mm, and in the range 0.5 mm to 0.55 mm. According to a possible embodiment L1 is 0.65 mm and H is 0.8. In any case L1 is always shorter than L.

In the present description, the width W of the edge is referred to the part of the receptacle that is effectively involved in the sealing action.

According to a possible embodiment, the distance L1 (see Fig. 4) between the lateral wall 2 of the capsule and the bottom end 7a of the inclined side 7 of said protrusion 5 is shorter than the width W of the edge 10 of said receptacle, i.e. L1<W. 7a is the point defined by the intersection of the inclined side 7 of the protrusion 5 and the upper surface of the flange-like rim 4.

In this case, the external portion 10a of the pressing edge 10 of receptacle 21 is generally located at least in part between the top 8 of protrusion 5 and the lateral wall 2 of capsule 1, but could also be totally located between top 8 and capsule wall 2. Two possible positions of edge 10 are shown in fig. 7A and 7B to show how the protrusion of the invention can compensate differences in compression paths (and even differences in width W); in fig. 7A the compression path of receptacle 21 is shorter than in fig. 7B and the distance of compressing edge 10 from the flange 4 is greater in 7A than in 7B. However, thanks to the design of the sealing protrusion, a sealing is obtained in both cases: in fig. 7A the external portion 10a of edge 10 of receptacle 21 is insisting on the inclined side 7 of the protrusion 5. In fig. 7B, where the distance edge 10 - flange 4 is smaller, edge 10 is insisting on the side 7 (internal side) of protrusion 5 with its external portion 10a and at least a portion of the pressing edge 10, here its internal portion 10b, is insisting also on the lateral wall 2 of the capsule. Internal side 7 of protrusion 5 will be in part deformed to accommodate the extra compression path, additionally, some degree of lateral movement of protrusion 5, due to the fact that it is made of thermoplastic material, will also help to accommodate receptacle 21 in the position of fig. 7B.

During the brewing step, this will result in a sort of closed chamber below the receptacle's edge 10. Moreover, according to another possible embodiment, not shown in the figures, in the closed condition or in the brewing step the edge 10 of the receptacle 21 is contacting the protrusion 5, and in particular at least a point of its inclined side 7, the lateral wall 2 of the capsule and at least a portion of the flange-like rim 4 of the capsule comprised between the lateral wall 2 and the inclined side 7 of the protrusion.

Fig. 8 shows another embodiment of the invention. In this embodiment protrusion 5 is provided with a cavity 17 that is located below protrusion 5 and/or below flange 4. In fig. 8 part of cavity 17 is obtained in the left part of flange 4, but it can also extend on the left side, or internal side, of the flange with respect to protrusion 5. The function of this cavity is to provide further flexibility of the sealing protrusion and to increase its deformability to adapt to different types of receptacles 21.

Fig. 9 schematically shows a possible compressed condition of the sealing protrusion of fig. 8 that has tilted according to the direction of arrow F in fig. 8. In case of a compression on the top 8, the protrusion will also shrink vertically.

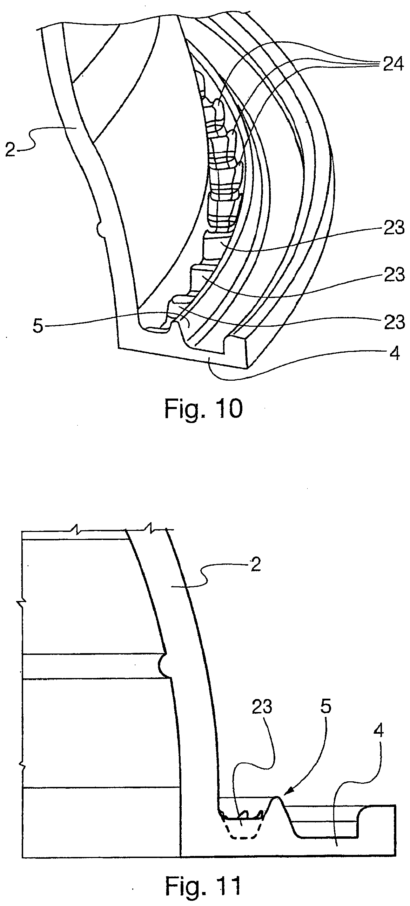

Fig. 10 and 11 show another embodiment of the invention, where a plurality of ridges or protruding elements 24 are extending radially from the capsule lateral wall 2 to sealing protrusion 5. The function of elements 24 is to adapt to the irregularities or indentations of pressing edge 10 and improve the sealing: to this purpose the shape of elements 24 is, in one embodiment, substantially corresponding to that of pressing edge 10, e.g. as elements 24 (fig. 10) that have a round/elliptical shape. In fig. 10 are also shown alternative radially extending elements 23: these elements have the same function of elements 24 but are in the form of thin walls extending radially from lateral wall 2 of the capsule or from protrusion 5. Elements 23 and 24 do not necessarily extend along the whole length from protrusion to capsule. These walls are shaped, dimensioned and positioned so as to deform under the pressing edge 10 and adapt to its indentations (if present).

Summarizing, the sealing means, or protrusion, 5 of the invention combines a top portion that is plastically deformable with a side 7 of the protrusion 5 that is inclined with respect to the flange plane P by an internal angle α within the range of 80 to 40 degrees, preferably within the range of 80 to 60 degrees, more preferably 75 to 60 degrees, and most preferably 70 to 65 degrees.

The top portion can be defined with an angle of 15 to 45 degrees if the sealing protrusion is substantially shaped as a triangle or with a top angle greater than 60 degrees, preferably greater than 90 degrees, and most preferably greater than 100 degrees if the sealing protrusion comprises a portion of increased thickness extending from the inclined side 7, as for example shown in figures 12 and 12A. The distance L of the top 8 of the protrusion 5 from the lateral wall 2 of the capsule is equal or greater than the width W of the edge 10 of the receptacle(s) 21 and is such as to have the receptacle 21 of the brewing device to insist on the top of the protrusion or, preferably, on the side of the protrusion. In a preferred embodiment the edge of the receptacle insists on both the side of the protrusion and the lateral wall of the capsule.

The disclosed combination is suitable to compensate different compression paths of the receptacle and to therefore provide an adaptable sealing element that can be used in different models of brewing devices that include a receptacle 21 and a receiving plate 22. Additionally, the above combination reduces the overall force required for sealing the receptacle on the capsule's flange.

Additional radially extending elements 23, 24 provide an improved sealing of the receptacle 21 on flange 4 of the capsule, per se or in combination with the sealing protrusion.

## Claims

1. A system for preparing a beverage, said system including :
- a capsule (1) comprising a hollow body (6) including a lateral wall (2), an inlet wall (3), a flange-like rim (4) and a sealing protrusion (5) extending outwardly of said flange rim and spaced from said lateral wall (2),
- a brewing device (20) comprising a receptacle (21) movable with respect to a receiving plate (22) of the brewing device from an open position to a closed position to provide a closed chamber for housing at least part of the capsule hollow body, said receptacle (21) being provided with a pressing edge (10) having an external portion (10a) facing away from the lateral wall (2) of said capsule (1),
wherein said protrusion (5) of the capsule has at least one internal side (7) that is inclined by an internal angle α within the range of 80 to 40 degrees with respect to a plane passing through the upper surface of said flange rim (4),
said system being **characterized in that** said angle α and the spacing (L) from said lateral wall (2) of said protrusion (5) are arranged to have said protrusion (5) contact the external portion (10a) of the pressing edge (10) of said receptacle (21) at said side (7) of the protrusion, or at both said side (7) of the protrusion and a top (8) of the protrusion.

2. A system according to claim 1, wherein said edge (10) of said receptacle (21) is housed between said inclined side (7) and said lateral wall (2) of the capsule.

3. A system according to any of claim 1 or 2, wherein said angle α is within the range of 80 to 60 degrees, preferably 75 to 60 degrees, and more preferably 70 to 65 degrees.

4. A system according to any previous claim, wherein said top (8) of the protrusion is at least in part plastically deformable.

5. A system according to claim 4, wherein the external diameter of the lateral wall (2) at the flange rim (4) of said capsule (1) is equal to the internal diameter of said receptacle (21).

6. A system according to any previous claim, wherein said protrusion (5) is in the shape of a triangle.

7. A system according to claim 6, wherein said triangle is selected from rectangled and scalene triangles.

8. A system according to claim 6, wherein the angle β of top vertex of said protrusion in the shape of a triangle is in the range of 10 to 45 degrees, preferably 15 to 35 degrees.

9. A system according to any claim 1 to 8, wherein said protrusion (5) forms at least one portion of increased thickness of said flange-like rim (4), said portion of increased thickness extending from said at least one side (7) of said protrusion (5) towards the edge (4a) of said flange-like rim (4).

10. A system according to claim 9, wherein said sealing protrusion (5) forming an increased thickness of the flange-like rim (4) is extending for the entire space, or only for a part of the space, between the at least one inclined side (7) and the peripheral edge (4a) of said flange-like rim (4).

11. A system according to claim 9 or 10, wherein said portion of increased thickness of the flange-like rim (4) comprises a flat surface extending from the top (8) of said inclined side (7) to the said edge (4a) of said flange-like rim (4).

12. A system according to any previous claim, wherein the edge (4a) of the flange-like rim (4) is substantially L-shaped in a radial cross sectional view.

13. A system according to any previous claim, wherein said flange-like rim (4) comprises at least one cavity (17) arranged on the surface of said flange-like rim (4) facing away from said inlet wall (3).

14. A system according to claim 13, wherein said at least one cavity (17) is arranged in correspondence of said edge (4a) of said flange-like rim (4) of the capsule.

15. A system according to any previous claim, wherein in the closed condition or in the brewing step the edge (10) of said receptacle is contacting both said protrusion (5) and said lateral wall (2) of the capsule.

16. A system according to any previous claim, wherein in the closed condition or in the brewing step the edge (10) of said receptacle is contacting said protrusion (5), said lateral wall (2) and at least a portion of the flange-like rim (4) of the capsule between said lateral wall (2) and said inclined side (7) of said protrusion (5).

17. A system according to any previous claim, wherein the distance (L1) between the lateral wall (2) of the capsule and the bottom end (7a) of the inclined side (7) of said protrusion (5) is comprised in the range 0.4 mm to 0.7 mm, preferably in the range 0.5 mm to 0.7 mm.

18. A system according to any previous claim, wherein the distance (L) between the top (8) of said protrusion (5) and said lateral wall (2) of the capsule is comprised in the range 0.6 mm to 1.0 mm, preferably said distance (L) is 0.7 mm.

19. A system according to any previous claim, wherein the distance (L1) between the lateral wall (2) of the capsule and the bottom end (7a) of the inclined side (7) of said protrusion (5) is shorter than the width (W) of the edge (10) of said receptacle.

20. A system according to any previous claim, wherein the distance (L) between top (8) of said protrusion (5) and said lateral wall (2) of the capsule is equal to or greater than the width (W) of the edge (10) of said receptacle.

21. A system according to any previous claim, wherein the capsule (1) comprises a plurality of sealing elements (24, 23) that are protruding from the capsule flange rim (4) and that extend radially between said lateral wall (2) and said sealing protrusion (5).

22. A system according to claim 21, wherein said sealing elements are selected from round elements (24) and thin walls (23).

## Patentansprüche

1. System zur Herstellung eines Getränks, umfassend:
- eine Kapsel (1) umfassend einen Hohlkörper (6) mit einer Seitenwand (2), einer Einlasswand (3), einem flanschartigen Rand (4) und einem sich von dem Flanschrand nach außen erstreckenden und von der Seitenwand (2) beabstandeten Dichtungsvorsprung (5),
- eine Brühvorrichtung (20), umfassend einen Aufnahmebehälter (21), welcher bezüglich einer Aufnahmeplatte (22) der Brühvorrichtung von einer offenen Position in eine geschlossene Position bewegbar ist, um zum Aufnehmen wenigstens eines Teils des Kapselhohlkörpers eine geschlossene Kammer bereitzustellen, wobei der Aufnahmebehälter (21) mit einer Druck-Kante (10) ausgebildet ist, welche einen von der Seitenwand (2) der Kapsel (1) abgewandten Außenabschnitt (10a) aufweist,
wobei der Vorsprung (5) der Kapsel wenigstens eine innen liegende Seite (7) aufweist, welche in einem Innenwinkel α im Bereich von 80 bis 40 Grad gegenüber einer durch die obere Fläche des Flanschrandes (4) verlaufenden Ebene geneigt ist,
wobei das System **dadurch gekennzeichnet ist, dass** der Winkel α und der Abstand (L) von der Seitenwand (2) des Vorsprungs (5) so angeordnet sind, dass der Vorsprung (5) den äußeren Abschnitt (10a) der Presskante (10) des Aufnahmebehälters (21) an der Seite (7) des Vorsprungs, oder sowohl an der Seite (7) des Vorsprungs als auch an einer Spitze (8) des Vorsprungs berührt.

2. System gemäß Anspruch 1, wobei die Kante (10) des Aufnahmebehälters (21) zwischen der geneigten Seite (7) und der Seitenwand (2) der Kapsel aufgenommen ist.

3. System gemäß einem der Ansprüche 1 oder 2, wobei der Winkel α im Bereich von 80 bis 60 Grad, vorzugsweise im Bereich von 75 bis 60 Grad und insbesondere bevorzugt im Bereich von 70 bis 65 Grad ausgebildet ist.

4. System gemäß einem der vorhergehenden Ansprüche, wobei die Spitze (8) des Vorsprungs zumindest teilweise plastisch verformbar ist.

5. System gemäß Anspruch 4, wobei der Außendurchmesser der Seitenwand (2) am Flanschrand (4) der Kapsel (1) dem Innendurchmesser des Aufnahmebehälters (21) entspricht.

6. System gemäß einem der vorhergehenden Ansprüche, wobei der Vorsprung (5) die Form eines Dreiecks aufweist.

7. System gemäß Anspruch 6, wobei das Dreieck aus rechtwinkligen und ungleichseitigen Dreiecken ausgewählt ist.

8. System gemäß Anspruch 6, wobei der Winkel β des oberen Scheitelpunktes des dreieckigen Vorsprungs im Bereich von 10 bis 45 Grad, vorzugsweise im Bereich von 15 bis 35 Grad ausgebildet ist.

9. System gemäß einem der Ansprüche 1 bis 8, wobei der Vorsprung (5) wenigstens einen Abschnitt mit erhöhter Dicke des flanschartigen Randes (4) ausbildet, wobei der Abschnitt mit erhöhter Dicke sich von der wenigstens einen Seite (7) des Vorsprungs (5) zur Kante (4a) des flanschartigen Randes (4) hin erstreckt.

10. System gemäß Anspruch 9, wobei der den Abschnitt von erhöhter Dicke des flanschartigen Randes (4) bildende Vorsprung (5) sich über den gesamten Raum oder nur über einen Teil des Raumes zwischen der wenigstens einen geneigten Seite (7) und der äußeren Kante (4a) des flanschartigen Randes (4) erstreckt.

11. System gemäß Anspruch 9 oder 10, wobei der Abschnitt von erhöhter Dicke des flanschartigen Randes (4) eine ebene Fläche umfasst, die sich von der Spitze (8) der geneigten Seite (7) zur Kante (4a) des flanschartigen Randes (4) erstreckt.

12. System gemäß einem der vorhergehenden Ansprüche, **dadurch gekennzeichnet, dass** die Kante (4a) des flanschartigen Randes (4) in einer radialen Querschnittsansicht im Wesentlichen L-förmig ausgebildet ist.

13. System gemäß einem der vorhergehenden Ansprüche, wobei der flanschartige Rand (4) wenigstens einen auf der Oberfläche des flanschartigen Randes (4) angeordneten, von der Einlasswand (3) abgewandten Hohlraum (17) aufweist.

14. System gemäß Anspruch 13, wobei der wenigstens eine Hohlraum (17) in Übereinstimmung mit der Kante (4a) des flanschartigen Randes (4) der Kapsel angeordnet ist.

15. System gemäß einem der vorhergehenden Ansprüche, wobei die Kante (10) des Aufnahmebehälters im geschlossenen Zustand oder während des Brühschritts sowohl den Vorsprung (5) als auch die Seitenwand (2) der Kapsel berührt.

16. System gemäß einem der vorhergehenden Ansprüche, wobei die Kante (10) des Aufnahmebehälters im geschlossenen Zustand oder während des Brühschritts den Vorsprung (5), die Seitenwand (2) und wenigstens einen Teil des zwischen der Seitenwand (2) und der geneigten Seite (7) des Vorsprungs (5) angeordneten flanschartigen Randes (4) der Kapsel berührt.

17. System gemäß einem der vorhergehenden Ansprüche, bei dem der Abstand (L1) zwischen der Seitenwand (2) der Kapsel und dem unteren Ende (7a) der geneigten Seite (7) des Vorsprungs (5) im Bereich von 0,4 mm bis 0,7 mm, vorzugsweise im Bereich von 0,5 mm bis 0,7 mm liegt.

18. System gemäß einem der vorhergehenden Ansprüche, wobei der Abstand (L) zwischen der Spitze (8) des Vorsprungs (5) und der Seitenwand (2) der Kapsel im Bereich von 0,6 mm bis 1,0 mm liegt, vorzugsweise beträgt der Abstand (L) 0,7 mm.

19. System gemäß einem der vorhergehenden Ansprüche, wobei der Abstand (L1) zwischen der Seitenwand (2) der Kapsel und dem unteren Ende (7a) der geneigten Seite (7) des Vorsprungs (5) kürzer als die Breite (W) der Kante (10) des Aufnahmebehälters ist.

20. Vorrichtung gemäß einem der vorhergehenden Ansprüche, wobei der Abstand (L) zwischen der Spitze (8) des Vorsprungs (5) und der Seitenwand (2) der Kapsel gleich oder größer als die Breite (W) der Kante (10) des Aufnahmebehälters ist.

21. Vorrichtung gemäß einem der vorhergehenden Ansprüche, wobei die Kapsel (1) mehrere, aus dem Flanschrand (4) der Kapsel herausragende und sich radial zwischen der Seitenwand (2) und dem Dichtungsvorsprung (5) erstreckende Dichtungselemente (24, 23) umfasst.

22. System gemäß Anspruch 21, wobei die Dichtungselemente ausgewählt sind aus runden Elementen (24) und dünnen Wänden (23).

## Revendications

1. Système pour la préparation d'une boisson, ledit système incluant :
- une capsule (1) comprenant un corps creux (6) incluant une paroi latérale (2), une paroi d'entrée (3), un bord de type bride (4) et une saillie étanche (5) s'étendant vers l'extérieur dudit bord de bride et espacée de ladite paroi latérale (2),
- un dispositif d'infusion (20) comprenant un réceptacle (21) mobile par rapport à une plaque de réception (22) du dispositif d'infusion depuis une position ouverte à une position fermée pour fournir une chambre fermée pour loger au moins une partie du corps creux de capsule, ledit réceptacle (21) étant doté d'une arête de pressage (10) présentant une partie externe (10a) éloignée de la paroi latérale (2) de ladite capsule (1),
dans lequel ladite saillie (5) de la capsule présente au moins un côté interne (7) qui est incliné par un angle interne α dans la plage de 80 à 40 degrés par rapport à un plan passant par la surface supérieure dudit bord de bride (4),
ledit système étant **caractérisé en ce que** ledit angle α et l'espacement (L) de ladite paroi latérale (2) de ladite saillie (5) sont agencés pour que ladite saillie (5) soit en contact avec la partie externe (10a) de l'arête de pressage (10) dudit réceptacle (21) sur ledit côté (7) de la saillie, ou à la fois sur ledit côté (7) de la saillie et un dessus (8) de la saillie.

2. Système selon la revendication 1, dans lequel ladite arête (10) dudit réceptacle (21) est logée entre ledit côté incliné (7) et ladite paroi latérale (2) de la capsule.

3. Système selon l'une quelconque des revendications 1 ou 2, dans lequel ledit angle α est dans la plage de 80 à 60 degrés, de préférence 75 à 60 degrés, et de manière davantage préférée de 70 à 65 degrés.

4. Système selon une quelconque revendication précédente, dans lequel ledit dessus (8) de la saillie est au moins en partie plastiquement déformable.

5. Système selon la revendication 4, dans lequel le diamètre externe de la paroi latérale (2) sur le bord de bride (4) de ladite capsule (1) est égal au diamètre interne dudit réceptacle (21).

6. Système selon une quelconque revendication précédente, dans lequel ladite saillie (5) se présente sous la forme d'un triangle.

7. Système selon la revendication 6, dans lequel ledit triangle est sélectionné parmi des triangles rectangles et scalènes.

8. Système selon la revendication 6, dans lequel l'angle β du vertex supérieur de ladite saillie sous la forme d'un triangle est dans la plage de 10 à 45 degrés, de préférence de 15 à 35 degrés.

9. Système selon l'une quelconque des revendications 1 à 8, dans lequel ladite saillie (5) forme au moins une partie d'épaisseur augmentée dudit bord de type bride (4), ladite partie d'épaisseur augmentée s'étendant dudit au moins un côté (7) de ladite saillie (5) vers l'arête (4a) dudit bord de type bride (4).

10. Système selon la revendication 9, dans lequel ladite saillie étanche (5) formant une épaisseur augmentée du bord de type bride (4) s'étend pour l'espace entier, ou seulement pour une partie de l'espace entre l'au moins un côté incliné (7) et l'arête périphérique (4a) dudit bord de type bride (4).

11. Système selon la revendication 9 ou 10, dans lequel ladite partie d'épaisseur augmentée du bord de type bride (4) comprend une surface plate s'étendant depuis le dessus (8) dudit côté incliné (7) à ladite arête (4a) dudit bord de type bride (4).

12. Système selon une quelconque revendication précédente, dans lequel l'arête (4a) du bord de type bride (4) est sensiblement en L dans une vue de section transversale radiale.

13. Système selon une quelconque revendication précédente, dans lequel ledit bord de type bride (4) comprend au moins une cavité (17) agencée sur la surface dudit bord de type bride (4) éloigné de ladite paroi d'entrée (3).

14. Système selon la revendication 13, dans lequel ladite au moins une cavité (17) est agencée en correspondance de ladite arête (4a) dudit bord de type bride (4) de la capsule.

15. Système selon une quelconque revendication précédente, dans lequel dans la condition fermée ou dans l'étape d'infusion, l'arête (10) dudit réceptacle touche à la fois ladite saillie (5) et ladite paroi latérale (2) de la capsule.

16. Système selon une quelconque revendication précédente, dans lequel dans la condition fermée ou dans l'étape d'infusion, l'arête (10) dudit réceptacle touche ladite saillie (5), ladite paroi latérale (2) et au moins une partie du bord de type bride (4) de la capsule entre ladite paroi latérale (2) et ledit côté incliné (7) de ladite saillie (5).

17. Système selon une quelconque revendication précédente, dans lequel la distance (L1) entre la paroi latérale (2) de la capsule et l'extrémité inférieure (7a) du côté incliné (7) de ladite saillie (5) est comprise dans la plage de 0,4 à 0,7 mm, de préférence dans la plage de 0,5 à 0,7 mm.

18. Système selon une quelconque revendication précédente, dans lequel la distance (L) entre le dessus (8) de ladite saillie (5) et ladite paroi latérale (2) de la capsule est comprise dans la plage de 0,6 à 1 mm, de préférence ladite distance (L) est de 0,7 mm.

19. Système selon une quelconque revendication précédente, dans lequel la distance (L1) entre la paroi latérale (2) de la capsule et l'extrémité inférieure (7a) du côté incliné (7) de ladite saillie (5) est plus courte que la largeur (W) de l'arête (10) dudit réceptacle.

20. Système selon une quelconque revendication précédente, dans lequel la distance (L) entre le dessus (8) de ladite saillie (5) et ladite paroi latérale (2) de la capsule est égale ou supérieure à la largeur (W) de l'arête (10) dudit réceptacle.

21. Système selon une quelconque revendication précédente, dans lequel la capsule (1) comprend une pluralité d'éléments étanches (24, 23) qui font saillie du bord de la bride de capsule (4) et qui s'étendent radialement entre ladite paroi latérale (2) et ladite saillie étanche (5).

22. Système selon la revendication 21, dans lequel lesdits éléments étanches sont sélectionnés parmi des éléments ronds (24) et des parois minces (23).
